# EUROPÄISCHE PATENTSCHRIFT

(11) **EP 1 065 451 B1**
(45) Veröffentlichungstag und Bekanntmachung des Hinweises auf die Patenterteilung: **22.10.2003**
(21) Anmeldenummer: 00112861.0
(22) Anmeldetag: 17.06.2000
(51) Int. Cl.: F24J 3/08

(54) **Graphithaltiges Verfüllmaterial für Erdreichwärmeüberträger**
Filling material comprising graphite for ground heat exchanger
Matériau de remplissage comportant du graphite pour échangeur de chaleur souterrain

(30) Priorität: 29.06.1999 DE 19929697; 07.12.1999 DE 19958765
(43) Veröffentlichungstag der Anmeldung: 03.01.2001
(73) Patentinhaber: Bayerisches Zentrum für Angewandte Energieforschung e.V. ZAE Bayern, 97054 Würzburg (DE)
(72) Erfinder: Ebert, Hans-Peter, Dr., 97377 Dettelbach (DE); Drach, Volker, Dr., 97265 Hettstadt (DE); Fricke, Jochen, Prof. Dr., 97218 Gerbrunn (DE); Esser, Peter, Dr., 48167 Münster (DE); Hahn, Thorsten, Dipl.-Ing., 59320 Ennigerloh (DE); Märten, Andreas, Dr., 48231 Warendorf (DE)
(74) Vertreter: Kaewert, Klaus

(56) Entgegenhaltungen:
- EP-A- 0 239 740
- EP-A- 0 567 025
- DE-A- 2 501 079
- DE-A- 3 821 684
- FR-A- 2 186 878
- LU-A- 81 670

## Beschreibung

Gegenstand der Erfindung ist ein Verfüllmaterial für Erdreichwärmeüberträger. Erdreichwärmeüberträger sind seit langem bekannt zur Nutzung von vorhandener Erdwärme. Dabei wird die im Erdreich natürlicherweise vorhandene Wärme mit Hilfe geeigneter Systeme abgezogen und z.B. einer Gebäudeheizung zugeführt.
Eine solche Anlage ist in der LU 81670 A beschrieben. Dabei sind im Erdreich Bohrungen vorgesehen. In den Bohrungen sind Sonden in Form von Rohren angeordnet, mit denen die Erwärme abgezogen wird. Zugleich ist der Spalt zwischen den Sonden und dem Erdreich verfüllt.

Es ist bekannt, als Verfüllmaterial ein Material zu verwenden, daß als Dichtwandmasse bekannt ist, vgl. EP 239740 A2. Wesentliche Bestandteile dieser Dichtwandmasse sind Tone und tonhaltige Materialien und Zement.

In neuerer Zeit ist die Nutzung von Erdreich für die Speicherung von Wärme hinzugekommen. Solche Systeme wirken mit Wärmekollektoren zusammen. Wärmekollektoren sammeln die Umgebungswärme, insbesondere aus der Sonneneinstrahlung. Die Wärme ist für verschiedene Zwecke nutzbar.
Allerdings ist der Wärmebedarf nicht immer deckungsgleich mit dem Wärmeangebot. In diesen Fällen bietet sich der Einbau eines Wärmespeichers an. In dem Wärmespeicher wird überschüssige Wärmeenergie für die Zeit gesammelt, in der das Wärmeangebot hinter dem Wärmebedarf zurückbleibt. Dann kann auf den Wärmespeicher zurückgegriffen werden.

Übliche Wärmespeicher sind Isolierbehälter.
Bekannt ist aber auch die Nutzung von Erdreich als Wärmespeicher.

Zur Langzeitspeicherung von Wärmeenergie stellt der Erdreichwärmespeicher eine erfolgreich eingesetzte Variante der erdgekoppelten Wärmepumpen dar. Die Erdreichwärmespeicher (siehe VDI -Richtlinie VDI 4640, Blatt 1) ermöglichen die Zuführung und Abführung von Wärmeenergie im Erdreich durch Wasser oder eine andere Wärmeträgerflüssigkeit in einem geschlossenen Kreislauf. Die Wärmezuführung bzw. Wärmeabführung kann verschieden gestaltet sein, z.B. in der Form von Erdwärmesonden. Erdwärmesonden geben dem Wärmespeicher einen besonderen Namen, Erdwärmesondenspeicher.
Für den Erdwärmesondenspeicher werden in geeigneten Bodenzonen vertikale Löcher ausgebohrt, die in der Regel eine Länge von weit mehr als 10 m aufweisen und deren Durchmesser ungefähr 20 cm beträgt. In diese Bohrlöcher werden als Erdwärmesonden geeignete Wasserrohre (z.B. U-Rohre oder Koaxialrohre aus PVC) eingesetzt (allgemein können Erdreichwärmeüberträger aber auch andere Bauformen aufweisen). Mit einem speziellen Bohrlochverfüllmaterial wird der thermische Kontakt zwischen der Erdwärmesonde und dem umgebenden Erdreich gewährleistet und die Rohre mechanisch fixiert.

Als Verfüllmaterial werden üblicherweise Mischungen aus Wasser, Ton oder tonhaltigem Material (z.B.Bentonit), hydraulischem Bindemittel (z.B. Zement, Kalk) und Quarzsand verwendet. Die Zusammensetzung dieser Mischung bewirkt im abgebundenen Zustand im wesentlichen die mechanische und chemische Resistenz des Verfüllmaterials. Der Quarzsand dient als Füllstoff und zur Erhöhung der Wärmeleitfähigkeit der Gesamtmischung. Die Sandkörnchen werden nach dem Abbinden der Bindemittelmischung mehr oder weniger von dem Bindemittel eingehüllt. Durch leichte Schrumpfung des Bindemittels beim Aushärteprozeß und unterschiedliche Ausdehnungskoeffizienten von Bindemittel und Quarzsand ist eine vollständige Anlagerung des Bindemittels an die Oberfläche des Sandkorns nicht immer gegeben. Es treten damit thermische Kontaktwiderstände an den Grenzen zwischen Komoberfläche und Bindemittel auf.
Umgebender Quarzsand besitzt eine Festkörperwärmeleitfähigkeit von etwa 1,5 W /(mK). Das abgebundene Verfüllmaterial hat jedoch wegen der oben genannten Probleme bei der thermischen Ankopplung, sowie wegen der geringen Wärmeleitfähigkeit der bindenden Komponenten Bentonit und Zement eine effektive Gesamtwärmeleitfähigkeit von etwa nur 1 W/(mK). Diese relativ niedrige Wärmeleitfähigkeit vermindert die Leistungsfähigkeit der Erdwärmesonde, d.h die Fähigkeit, große Wärmeleistungen zu übertragen. Dies ist entscheidend für die Effizienz des gesamten Speichersystems.

Die Aufgabe der Erfindung ist es für Erdreichwärmespeicher, die Wärmeleitfähigkeit des Verfüllmaterials, insbesondere für Bohrlöcher von Erdwärmesonden merklich zu erhöhen. Dabei sollen gleichzeitig optimale rheologische Eigenschaften gewahrt werden.

Als Lösung des Problems wird die Zumischung von Graphit vorgeschlagen.
Die Zumischung von Graphit ist aus der Kerntechnik (DE-A-3821684) an sich bekannt, aber dadurch für die Erdreichwärmeübertragung nicht nahe gelegt.

Andere Formen von Kohlenstoff wie Kohle und Ruß bringen keine nennenswerte Verbesserung der Wärmeleitfähigkeit. Graphit besitzt in reiner Form eine Wärmeleitfähigkeit von etwa 170 W/(mK). Um die mechanischen Eigenschaften des Verfüllmaterials nicht zu verändern, kommt bevorzugt Graphitpulver bzw. Graphitgranulat zum Einsatz, deren Partikelgröße etwa 0,001 bis 1 mm beträgt. Graphitpulver in grober Fraktion ist auch billiger erhältlich als feinkörniger Graphit.

Um gegebenenfalls eine besonders homogene Verfüllmaterialmischung zu erreichen, insbesondere weil auf die Zumischung von Sand verzichtet wird, können Graphitpulver mit Partikelgrößen zwischen 0,001 mm und 0,5mm verwendet werden.

Um eine noch bessere thermische Anbindung der Graphitpartikel an das umgebende Bindemittelmaterial zu gewährleisten, wird vorgeschlagen, als Graphit Blähgraphit zu verwenden. Blähgraphit besitzt zwar durch die offenporige schaumartige Struktur eine niedrigere Wärmeleitfähigkeit als das massive Graphitkorn, verbindet sich aber aufgrund seiner elastischen Eigenschaften und seiner Oberflächenstruktur inniger mit dem umgebenden Bindemittel.
Das Bindemittel dringt zum Teil in das Blähgraphitteilchen ein. Die elastischen Eigenschaften des Blähgraphits kompensieren das Problem der unterschiedlichen Ausdehnungskoeffizienten von Bindemittel und Graphitteilchen und reduzieren damit den Effekt der thermischen Kontaktwiderstände an den Korngrenzen.

Die typische Zusammensetzung des erfindungsgemäßen Verfüllmaterials ist im Ausführungsbeispiel angegeben. Dabei erreicht man eine Wärmeleitfähigkeit von mehr als 2 W/(mK), d.h. durch den Einsatz des Graphits im Verfüllmaterial wird die Wärmeleitfähigkeit verdoppelt. Die im Ausführungsbeispiel angegebene Zumischungsgrenze von Graphit ist nur als wirtschaftliche Grenze anzusehen. Auch Zumischungsanteile bis 50Gew.% und mehr sind deshalb denkbar.
Das hydraulisch abbindende Trockenmaterial soll beim Abteufen der Bohrung und Durchstoßen eines Aquifers eine Abdichtung dieses Aquifers bewirken. Je nach Bedarf kann das Trockenmaterial mit Additiven, insbesondere zur Verflüssigung, Verzögerung oder Beschleunigung des Abbindevorganges oder zur Stabilisierung, oder mit Quellmittel versetzt sein.

Ein besonders homogenes Verfüllmaterial erreicht man mit folgenden Ausgangsprodukten:
hydraulisch abbindendes Trockenmaterial folgender Zusammensetzung:
   20 bis 60 Gew% Kalksteinmehl aus Kalkmergel,
   15 bis 35 Gew% CEM I 42,5(Portlandzement),
   2 bis 15 Gew% t Natriumbentonit.
   15 bis 30 Gew% Graphit
   (Die Gewichtsangaben von Kalksteinmehl,Bentonit, Graphit und Zement beziehen sich auf die Menge Trockenmaterial),
zuzüglich Wasser, in einer Zugabe von 25 bis 35 Gew% (bezogen auf das Trockenmaterialgewicht), bis eine ausreichende Fließfähigkeit gegeben ist. Die Wasserzugabe wird mitbestimmt durch das Kalksteinmehl und den jeweiligen Zement. Das gilt umsomehr, wenn auch andere Zemente wie CEM II und CEM III anstelle von CEM I zum Einsatz kommen.
Die Zemente CEM I, II oder III entsprechen der DIN 1164 in der Änderung v. Okt.94.

Das eingesetzte Natriumbentonit hat zwei Aufgaben. Erstens soll es das Bohrloch abdichten. Das ist für das Abteufen durch eine wasserführende Schicht (Aquifer) wichtig. Zweitens soll es als Stabilisator ein Absetzen von Wasser aus dem Verfüllmaterial verhindern.
Die erforderliche Menge an Natriumbentonit erhöht sich geringfügig, wenn anstelle von Kalksteinmehl aus Kalkmergel ein Kalksteinmehl aus reinerem Kalkstein eingesetzt wird.

Der Graphit kann - vereinfacht gesehen - für die genaue Festlegung der Mischungsanteile als neutral angesehen werden. Im Versuchen ist feines Graphit mit einer Korngröße kleiner 0,05 mm (EDM von Graphit Kropfinühl AG) zur Anwendung gekommen.

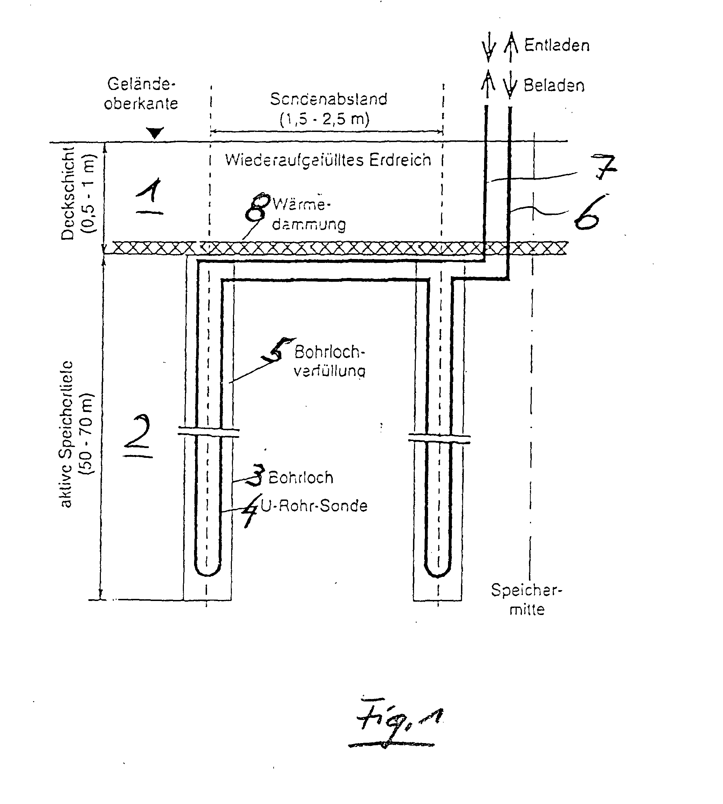

In der Zeichnung ist eine schematische Darstellung eines erfindungsgemäßen Erdwärmesondenspeichers wiedergegeben.
Zur Herstellung eines Erdwärmesondenspeichers ist im Ausführungsbeispiel der Mutterboden 1 abgeschoben worden, bis das darunter liegende gewachsene Erdreich 2 frei liegt. Anschließend sind verschiedene Erdbohrungen 3 in einem Abstand zwischen 1,5 bis 2,5 m abgeteuft worden. Der Bohrungsdurchmesser beträgt 20 cm, die Bohrtiefe 50 bis 70 m.
Alle Bohrlöcher 3 nehmen U-förmige Sonden auf. Dabei handelt es sich um U-förmig geführte Rohrleitungen 4. Die Rohrleitungen sind in ein Leitungsnetz eingebunden und mit einem nicht dargestellten Wärmekollektor sowie mit geeigneten Heizkörpern und einem Warmwasserbehälter verbunden. Der Leitungsteil 6 bildet den Vorlauf, der Leitungsteil 7, den Rücklauf des Leitungsnetzes.
Die Rohrleitungen 4 sind in den Bohrlöchern 3 mit einem oben beschriebenen Trockenmaterial als Verfüllmaterial fixiert.
Eine Wärmedämmung 8 schützt vor einem übermässigen Wärmeverlust nach oben.
Zur Fertigstellung des Erdwärmesondenspeichers gehört, daß der abgeschobene Mutterboden 1 wird aufgefüllt wird.

Im Betriebsfall fällt über den Wärmekollektor je nach Witterung aus der Umgebungsluft bzw. durch die Sonneneinstrahlung unterschiedlich viel Wärme an. Der für die genannten Wärmeabnehmer aktuelle Wärmebedarf wird aus der gesammelten Wärme gedeckt; Überschußwärme wird in den Erdwärmesondenspeicher gefahren und wieder abgerufen, wenn der aktuelle Wärmebedarf höher als Wärmeangebot des Wärmekollektors ist.

Soweit alle Wärmeangebote sich auf einem niedrigen Temperaturniveau befinden, kann die Temperatur mit einer Wärmepumpe nach Bedarf angehoben werden.

## Patentansprüche

1. Verwendung von Verfüllmaterial,
welches aus Trockenmörtel und Wasser gewonnen wird, wobei der Trockenmörtel teilweise besteht aus:
- Ton oder tonhaltigem Material
- Zement
- bis 50 Gew% pulver- oder granulatfrömigem Graphit oder Blähgraphit, bezogen auf den Trockenmörtel
in Erdreichwärmeüberträgern, bei denen Sonden zur Wärmeübertragung in Erdbohrungen (3) angeordnet sind und bei denen der Spalt zwischen Sonden (4) und Erdreich (2) verfüllt ist.

2. Verwendung nach Anspruch 1, **dadurch gekennzeichnet, daß** 5 Gew.% bis 35 Gew.% der Zusammensetzung des Trockenmörtels aus pulver- oder granulatförmigem Graphit oder Blähgraphit bestehen.

3. Verwendung nach Anspruch 1 oder 2, **dadurch gekennzeichnet, daß** der Graphit oder der Blähgraphit Korngrößen zwischen 0,001 mm und 1mm aufweist.

4. Verwendung nach Anspruch 1 oder 2, **dadurch gekennzeichnet, daß** der Graphit Korngrößen zwischen 0,001 und 0,5 mm aufweist.

5. Verwendung nach Anspruch 1 oder 2, **dadurch gekennzeichnet, daß** der Trockenmörtel folgende Zusammensetzung hat:
20 bis 60 Gew.% Kalksteinmehl
15 bis 35 Gew.% Zement
2 bis 15 Gew.% Natriumbentonit
10 bis 30 Gew.% Graphit

6. Verwendung nach Anspruch 5, **dadurch gekennzeichnet, daß** der Wasseranteil 25 bis 35 Gew% beträgt, bezogen auf das Trockenmörtelgewicht.

7. Verwendung nach Anspruch 5, **dadurch gekennzeichnet, daß** das Kalksteinmehl aus Kalkmergel hergestellt wird.

## Claims

1. Use of a ballast material in ground heat transfer systems,
which is obtained from dry mortar and water, whereby the dry mortar partially consists of:
- Clay or clay containing material
- Cement
- up to 50 wt.% powdered or granular graphite or expandable graphite, with respect to the dry mortar
whereby heat transfer probes are arranged in boreholes (3) and whereby the gap between the probes (4) and the ground (2) is backfilled.

2. Use according to Claim 1 **characterised in that** 5 wt.% - 35 wt.% of the composition of the dry mortar is powdered or granular graphite or expandable graphite.

3. Use according to Claim 1 or 2, **characterised in that** the graphite or the expandable graphite has a particle size between 0.001 and 1mm.

4. Use according to Claim 1 or 2, **characterised in that** the graphite or the expandable graphite has a particle size between 0.001 and 0.5mm.

5. Use according to Claim 1 or 2, **characterised in that** the dry mortar has the following composition:
20 to 60wt.% limestone meal
15 to 35 wt.% cement
2 to 15 wt.% sodium bentonite
10 to 30 wt.% graphite.

6. Use according to Claim 5 **characterised in that** the water content is 25-35 wt.% with respect to the weight of the dry mortar.

7. Use according to Claim 5 **characterised in that** the limestone meal is made from lime marl.

## Revendications

1. Utilisation de matériau de remplissage, qui est tiré de mortier siccatif et d'eau, le mortier siccatif étant composé en partie :
- d'argile ou d'un matériau argileux
- de ciment
- de jusqu'à 50% en poids de graphite en forme de poudre ou granulat ou de graphite boursouflé en fonction du mortier sec dans des échangeurs de chaleur souterrains dans lesquels des sondes pour l'échange de la chaleur sont disposées dans des forages (3) dans la terre et dans lesquels l'espace entre les sondes (4) et le sol (2) est rempli.

2. Utilisation selon la revendication 1, **caractérisée en ce qu'**entre 5% en poids et 35 % en poids de la composition du mortier siccatif est constitué de graphite en forme de poudre ou de graphite boursouflé.

3. Utilisation selon la revendication 1 ou 2, **caractérisée en ce que** le graphite ou le graphite boursouflé présente des tailles de particule entre 0,001 et 1 mm.

4. Utilisation selon la revendication 1 ou 2, **caractérisée en ce que** le graphite présente des tailles de particule entre 0,001 et 0,5 mm.

5. Utilisation selon la revendication 1 ou 2, **caractérisée en ce que** le mortier siccatif a la composition suivante :
20 à 60% en poids de farine de chaux carbonatée
15 à 35% en poids de ciment
2 à 15% en poids de bentonite de sodium
10 à 30% en poids de graphite

6. Utilisation selon la revendication 5, **caractérisée en ce que** la part en eau s'élève à 25 à 35% en poids par rapport au mortier siccatif.

7. Utilisation selon la revendication 5, **caractérisée en ce que** la farine de chaux carbonatée est fabriquée à base de chaux marneuse.
